(19) Europäisches Patentamt
European Patent Office
Office européen des brevets

(11) EP 3 593 643 A1

(12) EUROPÄISCHE PATENTANMELDUNG

(43) Veröffentlichungstag:
15.01.2020 Patentblatt 2020/03

(51) Int Cl.:
A23G 9/32 (2006.01)      A23G 9/42 (2006.01)
A23L 33/185 (2016.01)    A23G 9/38 (2006.01)
A23L 33/00 (2016.01)

(21) Anmeldenummer: 19185396.9

(22) Anmeldetag: 10.07.2019

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 13.07.2018 EP 18183464

(71) Anmelder: Midor AG
8706 Meilen (CH)

(72) Erfinder:
• AMATO, Lea
  8006 Zürich (CH)
• BUCHEGGER, Urs
  8708 Männedorf (CH)

(74) Vertreter: Piticco, Lorena
Isler & Pedrazzini AG
Giesshübelstrasse 45
Postfach 1772
8027 Zürich (CH)

(54) VEGANES GEFRORENES KONFEKT, ZUSAMMENSETZUNG GEEIGNET DAZU SOWIE EIN HERSTELLUNGSVERFAHREN

(57) Eine Lebensmittelzusammensetzung für ein gefrorenes Konfekt, welche im Wesentlichen frei von tierischen Bestandteilen und von Soja-Bestandteilen ist, umfasst mindestens ein pflanzliches Fett und weiter mindestens einen pflanzlichen Bestandteil mit einer Fettphase, wobei die Fettphase einen Festfettgehalt von 15 % oder weniger bei einer Temperatur von 5°C aufweist. Das mindestens eine pflanzliche Fett umfasst eine Fettphase mit einem Festfettgehalt von mehr als 60 % bei einer Temperatur von 5°C und eine Gesamtfettphase umfassend die Fettphase des mindestens einen pflanzlichen Bestandteils und die Fettphase des mindestens einen pflanzlichen Fetts hat einen Gesamtfestfettgehalt von mehr als 50 %. Ein Verfahren zur Herstellung eines gefrorenen Konfekts umfassend die Schritte von Bereitstellen einer solchen Lebensmittelzusammensetzung und das Einfrieren der Lebensmittelzusammensetzung, wobei die Lebensmittelzusammensetzung mit einem Gas, vorzugsweise Stickstoff, beaufschlagt wird, und wobei der Gasdruck insbesondere mindestens 3 bar beträgt.

FIG. 1a

EP 3 593 643 A1

**Beschreibung**

TECHNISCHES GEBIET

Die vorliegende Erfindung betrifft eine Lebensmittelzusammensetzung für ein gefrorenes Konfekt gemäss dem Oberbegriff von Anspruch 1, ein gefrorenes Konfekt sowie eine Verwendung umfassend eine solche Lebensmittelzusammensetzung gemäss den Ansprüchen 11 beziehungsweise 14, wie auch ein Verfahren zur Herstellung eines gefrorenen Konfekts umfassend eine solche Lebensmittelzusammensetzung gemäss Anspruch 15.

STAND DER TECHNIK

Gefrorene Konfekte wie Eiscreme sind bei den unterschiedlichsten Verbrauchern äusserst populär, wobei je nach Verbrauchertyp spezifische Anforderungen an das Konfekt gestellt werden. Beispielsweise führen Allergien oder Unverträglichkeiten der Verbraucher wie die Laktoseintoleranz dazu, dass ein grosser Bedarf an Laktose-freien oder generell antiallergenen Konfekten besteht. Wiederum andere Verbraucher möchten tierische Produkte aus ethischen Überzeugungen vermeiden. Vor diesem Hintergrund wurde in den letzten Jahren nach Alternativen zu den bestehenden Produkten gesucht, die diese und weitere Anforderungen berücksichtigen. Die dabei entwickelten Produkte erfüllen zwar einige der Kriterien, weisen aber dennoch gewisse Nachteile oder unerwünschte Nebenaspekte auf.

Beispielsweise wurden Milchalternativen für Eiscremes auf Basis von Reis, Soja, Lupinen und Hafer entwickelt, welche allerdings über eine schlechte Sensorik verfügen. So fehlt diesen Eiscremes die Milchnote und die Cremigkeit ist aufgrund der fehlenden hochfunktionalen Milchproteine unbefriedigend. Zudem verfügen Reis- und Hafer-basierte Produkte über einen unerwünschten getreideartigen Basisgeschmack. Während vegane Eiscremes auf Lupinen- und Sojabasis zwar teilweise über eine akzeptable Struktur im Sinne der Lebensmittelsensorik verfügen, ist auch bei diesen Produkten eine störende bohnige Geschmacksnote vorhanden. Gewisse Geschmackssorten wie Vanille oder fruchtige Sorten schmecken deshalb nicht. Die folgende Generation an veganem Eis stützt sich auf Milchalternativen welche geschmacklich zum Eis passen wie Kokos, Nüsse und Saaten. Analoges lässt sich auch für Produkte umfassend Kokosmilch festhalten, welche aufgrund ihres Kokosgeschmacks nur für gewisse Geschmackssorten geeignet sind.

Bei einem Nuss- oder Saaten basierten gefrorenen Konfekt, ist der Zusatz von Soja- und Lupinen-Bestandteile besonders gefährlich, weil «Soja» und «Lupine» nicht mehr im Namen oder der Sachbezeichnung vorkommt. Sie würden zu versteckten Allergenen führen.

Eine Weiterentwicklung führte zu veganen Eiscremes auf "Nussbasis". Beispielsweise ist aus der WO 2017/001265 A1 ein veganes und Soja-freies gefrorenes Konfekt bekannt, welches unter anderem gesättigtes Öl, pflanzliche Proteine und Nüsse beinhaltet.

Kokos, Nüsse und Saaten enthalten Fasern, Stärken und Proteine, welche Wasser binden und dem gefrorenen Konfekt eine Struktur verleihen, welche die ansonsten durch die Milchbestandteile bereitgestellte Struktur kompensiert. Im Gegensatz zu Kokos haben diese Nuss- und Ölsaaten Öle respektive Fette allerdings einen viel tieferen Schmelzpunkt. Oder in anderen Worten gesagt sind die Fette von Nüssen und Ölsaaten bei einer Temperatur von 5°C zu 100% oder beinahe zu 100% flüssig. Bereits relativ kleine Mengen an Nussöl oder Ölsaatenöl senken den Festfettgehalt der Fettphase (Solid Fat Content, SFC) erheblich, so dass die Nuss- beziehungsweise Ölsaatenöle die Eisstruktur zerstören und die Eiscreme sehr kalt, hart, nicht cremig und schlecht löffelbar wird sowie in kurzer Zeit wegschmilzt. Zudem sind die Öle respektive Fette der Nüsse und Saaten oxidationsempfindlich, sodass Produkte umfassend diese Bestandteile aufgrund von oxidierten Ölen bzw. Fetten einen Fehlgeschmack aufweisen können.

DARSTELLUNG DER ERFINDUNG

Es ist daher eine Aufgabe der Erfindung, eine Lebensmittelzusammensetzung für ein gefrorenes Konfekt anzugeben, welches die obgenannten Nachteile überwindet. Insbesondere soll eine Lebensmittelzusammensetzung für ein gefrorenes Konfekt angegeben werden, welche die ethischen und gesundheitlichen Anforderungen der Verbraucher erfüllt und gleichzeitig organoleptisch sowie hinsichtlich Cremigkeit, Mundgefühl, Abschmelzverhalten und Kälteempfinden ansprechend ist.

Diese Aufgabe wird durch eine Lebensmittelzusammensetzung gemäss Anspruch 1 gelöst. Insbesondere wird eine Lebensmittelzusammensetzung für ein gefrorenes Konfekt angegeben, wobei die Lebensmittelzusammensetzung im Wesentlichen frei von tierischen Bestandteilen und im Wesentlichen frei von Soja-Bestandteilen ist, und wobei die Lebensmittelzusammensetzung mindestens ein pflanzliches Fett umfasst. Die Lebensmittelzusammensetzung umfasst weiter mindestens einen pflanzlichen Bestandteil mit einer Fettphase, wobei die Fettphase einen Festfettgehalt von 15 % oder weniger bei einer Temperatur von 5 °C aufweist.

Im Wesentlichen frei von tierischen Bestandteilen heisst, dass die Lebensmittelzusammensetzung vorzugsweise gänzlich frei von tierischen Bestandteilen ist, also weniger als 0.1 Gew.-%, bevorzugt weniger als 20 ppm (parts per million), insbesondere 0 ppm an tierischen Bestandteilen bezüglich des Gesamtgewichts der Lebensmittelzusammensetzung aufweist. Unter tierischen Bestandteilen werden jegliche Bestandteile verstanden, welche direkt aus Tieren hergestellt werden oder von einem Tier stammen. Darunter fallen nebst tierischem Fleisch und Fett beispielsweise auch Milch, Eier, Sahne, Gelatine, Enzyme, Proteine, und so weiter.

Im Wesentlichen frei von Soja-Bestandteilen heisst, dass die Menge an Soja-Bestandteilen so gering ist, dass möglichst keine Soja-Allergien hervorgerufen werden. Die Menge an Soja-Bestandteilen in der Lebensmittelzusammensetzung umfasst also insbesondere weniger als 0.1 Gew.-%, bevorzugt weniger als 20 ppm (parts per million), vorzugsweise 0 ppm bezüglich des Gesamtgewichts der Lebensmittelzusammensetzung.

Dadurch, dass die vorliegende Lebensmittelzusammensetzung weder über Soja-Bestandteile noch über tierische Bestandteile wie z.B. Milchprodukte verfügt, ist sie zumindest im Hinblick auf die gängige Laktoseintoleranz und Soja-Allergie antiallergen und daher auf die Bedürfnisse von vielen an dieser Intoleranz beziehungsweise Allergie leidenden Verbraucher angepasst.

Das mindestens eine pflanzliche Fett umfasst eine Fettphase, welche einen Festfettgehalt in der Fettphase von mehr als 60 %, vorzugsweise von mehr als 75 % bei einer Temperatur von 5°C aufweist. Wie nachfolgend eingehender erläutert wird, wurde der Festfettgehalt der Fettphase des pflanzlichen Fetts, auch Solid Fat Conten (SFC) genannt, mittels der ISO 8292-1 Methode an der extrahierten wasserfreien Fettphase des mindestens einen pflanzlichen Fetts der Lebensmittelzusammensetzung bestimmt.

Die Lebensmittelzusammensetzung weist eine Gesamtfettphase umfassend die Fettphase des mindestens einen pflanzlichen Bestandteils und die Fettphase des mindestens einen pflanzlichen Fetts mit einem Gesamtfestfettgehalt von mehr als 50 %, vorzugsweise von mehr als 60 %, insbesondere bevorzugt von zwischen 65 % und 88 % bei einer Temperatur von 5 °C auf. Wiederum in anderen Worten gesagt weist die Gesamtfettphase umfassend alle Fett-Bestandteile der Lebensmittelzusammensetzung einen Festfettgehalt beziehungsweise SFC in den soeben genannten Bereichen auf. Sofern also beispielsweise zumindest teilweise entfettetes Mandelmehl (siehe weiter unten) verwendet wird, so ist es von Vorteil, wenn die Gesamtfettphase umfassend die Fettphase des mindestens einen pflanzlichen Fetts und die Fettphase des zumindest teilweise entfetteten Mandelmehls einen Gesamtfestfettgehalt von mehr als 50 %, vorzugsweise von mehr als 60 %, insbesondere bevorzugt von zwischen 65 % und 88 % bei einer Temperatur von 5°C aufweist.

Dadurch, dass der mindestens eine pflanzliche Bestandteil über einen Festfettgehalt der Fettphase, auch SFC genannt, von 15 % oder weniger, vorzugsweise von 5 % oder weniger, beispielsweise zwischen 0 % und 5 %, und insbesondere bevorzugt zwischen 0 % und 2 %, bei einer Referenztemperatur von 5 °C verfügt, und das pflanzliches Fett einen Festfettgehalt der Fettphase von mehr als 60 %, vorzugsweise von mehr als 75 % bei einer Temperatur von 5°C aufweist, sowie die Gesamtfettphase umfassend die Fettphase des mindestens einen pflanzlichen Bestandteils und die Fettphase des mindestens einen pflanzlichen Fetts einen Gesamtfestfettgehalt von mehr als 50 %, vorzugsweise mehr als 60 %, insbesondere bevorzugt von zwischen 65 % und 88 % bei einer Temperatur von 5°C hat, weist die vorliegende Lebensmittelzusammensetzung trotz einer Zusammensetzung mit tiefschmelzenden Fetten einen erhöhten Festfettgehalt der Gesamtfettphase mit gleichzeitig tieferem Fettgehalt auf. Dies erlaubt deutlich höhere Luftaufschläge (höherer Overrun) bei der weiteren Verarbeitung der Lebensmittelzusammensetzung zu z.B. Eiscreme, was zu einer verbesserten Cremigkeit und Portionierbarkeit führt und auch die Heat-Shock-Resistenz von solchen Produkten erhöht. Daneben reduzieren sich auch der Brennwert der Lebensmittelzusammensetzung sowie die Materialkosten deutlich pro verkauftes Endprodukt-Volumen.

Der Festfettgehalt respektive der SFC wurde hierin jeweils mittels einer Kernspinresonanz (NMR) Messung gemäss dem Internationalen Standard ISO 8292-1 an der extrahierten wasserfreien Fettphase des mindestens einen pflanzlichen Bestandteils der Lebensmittelzusammensetzung bestimmt. Wie eingangs bereits erwähnt, wurde auch der Festfettgehalt der Fettphase des pflanzlichen Fetts mittels der ISO 8292-1 Methode an der extrahierten wasserfreien Fettphase des mindestens einen pflanzlichen Fetts der Lebensmittelzusammensetzung bestimmt. Analoges lässt sich für den Gesamtfestfettgehalt der Lebensmittelzusammensetzung festhalten, welcher ebenfalls mittels der ISO 8292-1 Methode an der extrahierten wasserfreien Gesamtfettphase der Lebensmittelzusammensetzung bestimmt wurde.

Weiter ist es bevorzugt, wenn die Lebensmittelzusammensetzung im Wesentlichen frei von Lupinen-Bestandteile ist. Im Wesentlichen frei von Lupinen-Bestandteilen heisst, dass die Menge an Lupinen-Bestandteilen so gering ist, dass möglichst keine Lupinen-Allergien hervorgerufen werden. Die Menge an Lupinen-Bestandteilen in der Lebensmittelzusammensetzung umfasst also insbesondere weniger als 0.1 Gew.-%, bevorzugt weniger als 20 ppm (parts per million), vorzugsweise 0 ppm bezüglich des Gesamtgewichts der Lebensmittelzusammensetzung. Dadurch ergibt sich ein weiterer Vorteil im Hinblick auf die gängige Lupinen-Allergie.

Der mindestens eine pflanzliche Bestandteil kann mindestens ein pflanzliches Mehl sein. Vorzugsweise handelt es sich beim mindestens einen pflanzlichen Mehl um Mehl aus gemahlenen Mandeln, Haselnüssen, Walnüssen, Macadamia, Pistazien, Cashew, Erdnüssen, Sonnenblumen, Leinsamen, Sesam, Hanfsamen, Kürbiskernen, oder Kombinationen. Insbesondere bevorzugt ist das mindestens eine pflanzliche Mehl ein zumindest teilweise entfettetes pflanzliches Mehl aus gemahlenen Mandeln, Haselnüssen, Walnüssen, Macadamia, Pistazien, Cashew, Erdnüssen, Sonnenblumen, Leinsamen, Sesam, Hanfsamen, Kürbiskernen, oder Kombinationen davon. Entscheidend ist, dass bei diesen gemahlenen pflanzlichen Bestandteilen der Festfettgehalt der Fettphase beziehungsweise der SFC jeweils 15 % oder weniger bei einer Temperatur von 5 °C beträgt. Eine Kokosnuss, beispielsweise, deren Festfettgehalt beziehungsweise SFC deutlich höher als 15 % ist, ist somit kein geeigneter pflanzlicher Bestandteil im Sinne der vorliegenden Erfindung. Anders gesagt ist es also von Vorteil, wenn möglichst wenig Fett des mindestens einen pflanzlichen Bestandteils in die Lebensmittelzusammensetzung gelangt, so dass der SFC der Gesamtfettphase der Lebensmittelzusammensetzung möglichst hoch ist.

Vorzugsweise handelt es sich bei dem mindestens einen pflanzlichen Bestandteil um Mandelmehl, Haselnussmehl, Cashewmehl, Hanfsamenmehl, Sesammehl oder Kombinationen davon, wobei das Mandelmehl und/oder das Haselnussmehl und/oder das Cashewmehl und/oder das Hanfsamenmehl und/oder das Sesammehl insbesondere bevorzugt jeweils zumindest teilweise entfettet ist. Am bevorzugtesten ist der pflanzliche Bestandteil zumindest teilweise entfettetes Mandelmehl. Diese Mehle zeichnen sich unter anderem durch ihre Geschmacksneutralität oder einem für Süssspeisen passenden Geschmack aus. Geschmacksstarke Mehle aus zum Beispiel Linsen, Bohnen, Kichererbsen oder Lupinen werden somit nicht verwendet. Neben dem Fremdgeschmack ist der Fettgehalt dieser Bestandteile vor einer allfälligen teilweisen Entfettung deutlich unter 20 Gew.-% bezüglich des Gesamtgewichts des jeweiligen Bestandteils. Das ist zu tief, um die hierin beschriebenen Vorteile zu erzielen.

In diesem Zusammenhang bedeutet "zumindest teilweise entfettet", dass den obgenannten gemahlenen pflanzlichen Bestandteilen ein Teil ihres Fettes entzogen wurde, weil der jeweilige gemahlene pflanzliche Bestandteil oder eine Kombination davon eine Fettphase mit einem Festfettgehalt bzw. SFC von 15 % oder weniger umfasst. Dabei wird den pflanzlichen Bestandteilen ein Teil ihres Fetts herausgepresst oder anderweitig entfernt, und alsdann werden die so teilweise entfetteten pflanzlichen Bestandteile gemahlen. Typischerweise erfolgt bei den obgenannten pflanzlichen Bestandteilen eine zumindest teilweise Entfettung dadurch, dass ihr jeweiliger Fettgehalt um einen Faktor 2, besser um einen Faktor 3 oder mehr reduziert wird. Dabei gilt zu verstehen, dass es sich bei diesen gemahlenen pflanzlichen Bestandteilen ansonsten um natürliche, insbesondere um keine aufbereiteten Bestandteile handelt. Das heisst, die pflanzlichen Bestandteile entsprechen nicht isolierten Proteinen oder isolierten Fasern. Die Nuss- und/oder Saaten-Charakteristik soll klar erkennbar sein. Fasern und Stärken und ein Restfettgehalt soll noch enthalten sein.

Weiter gilt es zu verstehen, dass bei der zumindest teilweisen Entfettung keine Verschiebung des Festfettgehalts in der Fettphase des pflanzlichen Bestandteils erfolgt. Entsprechend weist das oder die gemahlenen pflanzlichen Mehle vor wie auch nach der Entfettung jeweils im Wesentlichen denselben Festfettgehalt der Fettphase beziehungsweise SFC auf.

Weiter ist es denkbar, eine zumindest teilweise Entfettung des pflanzlichen Bestandteils bei einer oder mehreren bestimmten Temperaturen durchzuführen. Dadurch kann eine selektive Entfettung bewirkt werden, bei welcher in Abhängigkeit von der Temperatur bestimmte Fette aus dem pflanzlichen Bestandteil entfernt werden. Wird beispielsweise eine Entfettung bei minus 5°C durchgeführt, so werden dabei selektiv einzig die tiefschmelzenden Fette aus dem pflanzlichen Bestandteil extrahiert.

Indem zumindest teilweise entfettetes pflanzliches Mehl verwendet wird, weist die vorliegende Lebensmittelzusammensetzung gegenüber einer Zusammensetzung mit den üblicherweise verwendeten tiefschmelzenden Nuss- oder Ölsaatenfetten einen erhöhten Festfettgehalt in der Fettphase mit gleichzeitig tieferem Fettgehalt auf. Nebst der deutlich höheren Luftaufschlägen bei der weiteren Verarbeitung wird auch die Lagerstabilität, Haltbarkeit und Geschmacksstabilität aufgrund der fehlenden oder zumindest reduzierten Oxidationsempfindlichkeit der zumindest teilweise entfetteten pflanzlichen Mehle verbessert.

Die Gesamtmenge des mindestens einen pflanzlichen Bestandteils kann zwischen 1 Gew.-% und 12 Gew.-%, vorzugsweise zwischen 1.5 bis 7 Gew.-%, insbesondere bevorzugt zwischen 2.5 bis 5.5 Gew.-% bezüglich des Gesamtgewichts der Lebensmittelzusammensetzung betragen. Im Falle eines pflanzlichen Bestandteils in Form von gemahlenen pflanzlichen Mehlen heisst dies, dass die Gesamtmenge des vorzugsweise zumindest teilweise entfetteten pflanzlichen Mehls zwischen 1 Gew.-% und 12 Gew.-%, vorzugsweise zwischen 1.5 bis 7 Gew.-%, insbesondere bevorzugt zwischen 2.5 und 5.5 Gew.-%betragen kann. Das wiederum heisst, sofern die Lebensmittelzusammensetzung nur ein oder auch mehrere vorzugsweise zumindest teilweise entfettete pflanzliche Mehle enthält, so beträgt die Gesamtmenge des einen oder der mehreren pflanzlichen Mehle in der Lebensmittelzusammensetzung vorzugsweise zwischen 1 Gew.-% und 12 Gew.-%, bevorzugt zwischen 1.5 bis 7 Gew.-%, insbesondere bevorzugt zwischen 2.5 und 5.5 Gew.-%.

Im Falle eines pflanzlichen Bestandteils umfassend zumindest teilweise entfettetes Mandelmehl, zumindest teilweise entfettetes Haselnussmehl, zumindest teilweise entfettetes Cashewmehl, zumindest teilweise entfettetes Hanfsamenmehl, zumindest teilweise entfettetes Sesammehl oder Kombinationen davon, beträgt die Gesamtmenge des Mehls respektive dieser Mehle also zwischen 1 Gew.-% und 12 Gew.-%, vorzugsweise zwischen 1.5 bis 7 Gew.-%, insbesondere bevorzugt zwischen 2.5 und 5.5. Gew.-% bezüglich des Gesamtgewichts der Lebensmittelzusammensetzung. Nochmals anders gesagt umfasst eine bevorzugte Lebensmittelzusammensetzung zwischen 1 Gew.-% und 12 Gew.-%, vorzugsweise zwischen 1.5 bis 7 Gew.-%, insbesondere bevorzugt zwischen 2.5 und 5.5 Gew.-% des zumindest teilweise entfetteten Mandelmehls.

Das mindestens eine pflanzliche Fett kann ein Triglycerid-Fett umfassen, und/oder das mindestens eine pflanzliche Fett kann ein ungehärtetes pflanzliches Fett sein. Das mindestens eine pflanzliche Fett kann ausgewählt sein aus Kokosfett, Palmfett, Palmkernfett, oder einer Kombination davon, wobei das mindestens eine pflanzliche Fett vorzugsweise Kokosfett ist.

Das heisst, es ist bevorzugt, ein hochschmelzendes pflanzliches Fett zu verwenden, welches geschmacklich neutral ist respektive dessen Eigengeschmack nicht wahrnehmbar ist. Dabei werden vorzugsweise ungehärtete Fette verwendet, oder anders gesagt werden vorzugsweise keine gehärteten oder teilgehärteten Fette eingesetzt. Insbesondere bevorzugt werden fraktionierte Fette von Kokosfett und/oder Palmfett und/oder Palmkernfett verwendet, wobei jeweils die hochschmelzende Fraktion des oder der Fette verwendet wird. Das oder die pflanzlichen Fette dienen dazu, die Fettquelle in der Lebensmittelzusammensetzung bereitzustellen, wobei das oder die pflanzlichen Fette der Lebensmittelzusammensetzung weiter auch ihre Cremigkeit und die Heat-Shock-Stabilität verleihen, indem sie den Festfettgehalt beziehungsweise SFC anheben.

Die Gesamtmenge des mindestens einen pflanzlichen Fetts kann zwischen 2 Gew.-% und 15 Gew.-%, vorzugsweise etwa 10 Gew.-% bezüglich des Gesamtgewichts der Lebensmittelzusammensetzung betragen. Das heisst, es werden vorzugsweise eines oder mehrere pflanzliche Fette in die Lebensmittelzusammensetzung zugegeben, wobei die resultierende Menge dieses Fetts respektive dieser Fette in den soeben angegebenen Bereichen liegt. Insbesondere ist es bevorzugt, zwischen 2 Gew.-% und 15 Gew.-%, vorzugsweise etwa 10 Gew.-% Kokosfett bezüglich des Gesamtgewichts der Lebensmittelzusammensetzung zu verwenden.

Vorzugsweise umfasst die Lebensmittelzusammensetzung weiter mindestens ein pflanzliches Protein und/oder mindestens ein pflanzliches Proteinisolat, vorzugsweise Kartoffelprotein und/oder Erbsenprotein. Somit ist es von Vorteil, ein pflanzliches, geschmacklich neutrales Protein zu verwenden, welches dabei kein Allergen wie beispielsweise ein Sojaprotein, Hafer- oder Lupinenprotein ist. Wie erwähnt kann es sich bei diesem pflanzlichen auch um ein Proteinisolat handeln. Weiter ist es von Vorteil, wenn das pflanzliche Protein beziehungsweise Proteinisolat in der Lebensmittelzusammensetzung gut dispergierbar ist. Die gute Cremigkeit wird zudem aufgrund der Fettstabilisierung mit dem oder den pflanzlichen Proteinen erreicht.

Die Gesamtmenge des mindestens einen pflanzlichen Proteins und/oder des mindestens einen pflanzlichen Proteinisolats kann zwischen 0.5 Gew.-% und 4.0 Gew.-%, vorzugsweise 0.7 bis 2.5 Gew.-% bezüglich des Gesamtgewichts der Lebensmittelzusammensetzung betragen. Für den Fall, dass nur ein pflanzliches Protein respektive nur ein pflanzliches Proteinisolat wie auch für den Fall das zwei oder mehrere pflanzliche Proteine und/oder pflanzliche Proteinisolate verwendet werden, ist die Gesamtmenge des oder der pflanzlichen Proteine beziehungsweise pflanzlichen Proteinisolate somit vorzugsweise jeweils innerhalb diesen Bereichen. Eine bevorzugte Lebensmittelzusammensetzung umfasst also zwischen 0.5 Gew.-% und 4.0 Gew.-%, vorzugsweise etwa 0.7 bis 2.5 Gew.-% Kartoffelprotein (und/oder Kartoffelproteinisolat) bezüglich des Gesamtgewichts der Lebensmittelzusammensetzung. Denkbar ist allerdings auch eine Lebensmittelzusammensetzung umfassend zwischen 0.5 Gew.-% und 4.0 Gew.-%, vorzugsweise etwa 0.7 bis 2.5 Gew.-% Erbsenprotein (und/oder Erbsenproteinisolat) bezüglich des Gesamtgewichts der Lebensmittelzusammensetzung. Auch denkbar sind Kombinationen davon, beispielsweise zwischen 0.5 Gew.-% und 4.0 Gew.-%, vorzugsweise etwa 0.7 bis 2.5 Gew.-% Kartoffelprotein und Erbsenprotein (und/oder Kartoffelproteinisolat und/oder Erbsenproteinisolat).

Die Lebensmittelzusammensetzung kann weiter mindestens ein Süssungsmittel, insbesondere ein Süssungsmittel ausgewählt aus Sacchariden, wie Saccharose, Stärkehydrolysat, Invertzucker, Honig, Agavendicksaft, Ahornsirup, usw. oder Kombinationen davon, und/oder weiter mindestens einen Stabilisator, insbesondere einen Stabilisator ausgewählt aus Johannisbrotkernmehl, Guarkernmehl, Pektin, Carrageenan, Alginate, Cellulosederivate oder Kombinationen davon, und/oder weiter mindestens einen Emulgator wie Monoglyceride von Speisefettsäuren und/oder Diglyceride von Speisefettsäuren und/oder Derivate von Speisefettsäuren und/oder Lecithin, und/oder weiter mindestens einen Aromastoff umfassen.

Bei den Stabilisatoren handelt es sich vorzugsweise um Stabilisatoren, welche gemäss der Schweizer Verordnung des EDI 817.022.31 über die zulässigen Zusatzstoffe in Lebensmitteln für gefrorene Süssspeisen zugelassen sind, wobei die Stabilisatoren Johannisbrotkernmehl, Guarkernmehl, Pektin und Carrageenan bevorzugt sind. Auch bei den Emulgatoren handelt es sich vorzugsweise um Emulgatoren, welche gemäss dieser Schweizer Verordnung für gefrorene Süssspeisen als Emulgatoren zulässig sind. Denkbare Aromen sind Aromen im Sinne der Schweizer Aromenverordnung 817.022.41 vom 1. Mai 2018, wobei insbesondere natürliche Aromen zu bevorzugen sind.

Beim Süssungsmittel handelt es sich um Saccharide, beispielsweise also um Zucker, oder Oligosaccharide, wobei zusätzlich oder anstelle der obgenannten Süssungsmittel auch zuckerreduzierte oder brennwertreduzierte Süssungsmittel beziehungsweise für Diabetiker geeignete Süssungsmittel verwendet werden können. Beispielsweise ist es denkbar, ein Süssungsmittel in Form einer Mischung umfassend Polyole (wie Sorbit, Xylit, Isomalt, Lactit, Maltit, Erythrit, Glycerin, etc.), Zucker oder Oligosaccharide mit reduziertem Brennwert wie Tagatose, Inulin und so weiter, Polydextrose, natürliche oder synthetische Zuckerersatzstoffe, natürliche oder synthetische Süssstoffe, Stärke und pflanzliche Fasern (einschliesslich teilweise abgebaute Fasern) zu verwenden.

Zudem ist es denkbar, dass die vorliegende Lebensmittelzusammensetzung nur natürliche Zutaten umfasst und entsprechend auch nur eine natürliche Stabilisierung und Emulgierung, z.B. durch natürliche pflanzliche Fasern oder native Stärken, und Lecithine erfährt. Das heisst, die natürlichen Zutaten werden dann ohne chemische Verfahren, sondern einzig durch physikalische und/oder fermentative Herstellungsverfahren, hergestellt. Bei den natürlichen Zutaten kann es sich weiter auch um biologische Zutaten handeln, also um Zutaten, welche aus einem ökologisch kontrollierten und gegebenenfalls entsprechend zertifizierten Anbau stammen.

Die Gesamtmenge des Süssungsmittels kann zwischen 10 Gew.-% und 30 Gew.-%, vorzugsweise etwa 20 Gew.-% bezüglich des Gesamtgewichts der Lebensmittelzusammensetzung betragen, und/oder die Gesamtmenge des Stabilisators kann zwischen 0.2 Gew.-% und 5 Gew.-%, vorzugsweise weniger als 1 Gew.-% bezüglich des Gesamtgewichts der Lebensmittelzusammensetzung betragen, und/oder die Gesamtmenge des Emulgators kann zwischen 0.1 Gew.-% und 1.5 Gew.-%, vorzugsweise weniger als 1 Gew.-% bezüglich des Gesamtgewichts der Lebensmittelzusammensetzung betragen, und/oder die Gesamtmenge des Aromastoffs kann weniger als 1 Gew.-% bezüglich des Gesamtgewichts der Lebensmittelzusammensetzung betragen.

Beispielsweise umfassen somit also 100 Gramm einer bevorzugten Lebensmittelzusammensetzung:

- zwischen 45-75 Gramm Wasser, bevorzugt 61 Gramm Wasser;
- zwischen 10-30 Gramm Süssungsmittel, bevorzugt 20 Gramm Süssungsmittel;
- zwischen 2-15 Gramm pflanzliches Fett, bevorzugt 10 Gramm pflanzliches Fett;
- zwischen 1-12 Gramm von mindestens einem pflanzlichen Bestandteil wie z.B. zumindest teilweise entfettetes pflanzliches Mehl, bevorzugt zwischen 2.5-7 Gramm, insbesondere bevorzugt zwischen 2.5 und 5.5 Gramm des mindestens einen pflanzlichen Bestandteils;
- zwischen 0.5-4 Gramm pflanzliches Protein und/oder pflanzliches Proteinisolat, bevorzugt 0.7 bis 2.5 Gramm pflanzliches Protein und/oder pflanzliches Proteinisolat;
- zwischen 0.05-5 Gramm Stabilisator, bevorzugt weniger als 1 Gramm Stabilisator;
- zwischen 0.05-1.5 Gramm Emulgator, bevorzugt weniger als 1 Gramm Emulgator, sowie
- weniger als 1 Gramm Aromen.

Wie aus obigen Beispielen hervorgeht, kann die Lebensmittelzusammensetzung Wasser aufweisen, weshalb hierin die Gewichtsangaben der jeweiligen Bestandteile bezüglich des Gesamtgewichts der Lebensmittelzusammensetzung einschliesslich des Gewichts von Wasser sind. Wird die Lebensmittelzusammensetzung ohne Wasser bereitgestellt, so werden die Gewichtsangaben der jeweiligen Bestandteile bezüglich des Gesamtgewichts der Lebensmittelzusammensetzung um das Gewicht des Wassers entsprechend skaliert.

Die Lebensmittelzusammensetzung ist vorzugsweise gefroren. Dabei kann die gefrorene Lebensmittelzusammensetzung in einem Temperaturbereich von kleiner als minus 18 °C in einem gefrorenen Zustand verbleiben.

In einem weiteren Aspekt wird ein gefrorenes Konfekt umfassend eine Lebensmittelzusammensetzung wie oben beschrieben angegeben. Beim gefrorenen Konfekt handelt es sich vorzugsweise um Eiscreme, insbesondere um eine vegane Eiscreme.

Sämtliche Aussagen und Angaben, welche für die obige Lebensmittelzusammensetzung gemacht wurden, treffen somit analog auf das gefrorene Konfekt umfassend diese Lebensmittelzusammensetzung zu.

Das heisst, das gefrorene Konfekt ist im Wesentlichen frei von tierischen Bestandteilen und im Wesentlichen frei von Soja-Bestandteilen, und umfasst mindestens ein pflanzliches Fett. Weiter umfasst das gefrorene Konfekt mindestens einen pflanzlichen Bestandteil mit einer Fettphase, wobei die Fettphase einen Festfettgehalt von 15 % oder weniger bei einer Temperatur von 5°C aufweist. Das gefrorene Konfekt kann zudem ebenfalls im Wesentlichen frei von Lupinen-Bestandteilen sein. Der mindestens eine pflanzliche Bestandteil des gefrorenen Konfekts ist vorzugsweise mindestens ein pflanzliches Mehl, bevorzugt mindestens ein pflanzliches Mehl ausgewählt aus gemahlenen Mandeln, Haselnüssen, Walnüssen, Macadamia, Pistazien, Cashew, Erdnüssen, Sonnenblumen, Leinsamen, Sesam, Hanfsamen, Kürbiskernen, oder Kombinationen. Insbesondere bevorzugt ist das mindestens eine pflanzliche Mehl ein zumindest teilweise entfettetes pflanzliches Mehl aus gemahlenen Mandeln, Haselnüssen, Walnüssen, Macadamia, Pistazien, Cashew, Erdnüssen, Sonnenblumen, Leinsamen, Sesam, Hanfsamen, Kürbiskernen, oder Kombinationen davon.

Das mindestens eine pflanzliche Fett des gefrorenen Konfekts kann eine Fettphase umfassen, welche einen Festfettgehalt von mehr als 60 %, vorzugsweise von mehr als 75 % bei einer Temperatur von 5°C aufweist.

Das gefrorene Konfekt kann eine Gesamtfettphase umfassend die Fettphase des mindestens einen pflanzlichen Bestandteils und die Fettphase des mindestens einen pflanzlichen Fetts umfassen, welche Gesamtfettphase einen Gesamtfestfettgehalt von mehr als 50 %, vorzugsweise mehr als 60 %, insbesondere bevorzugt von zwischen 65 % und 88 % bei einer Temperatur von 5°C aufweist.

Die Gesamtmenge des mindestens einen pflanzlichen Bestandteils kann zwischen 1 Gew.-% und 12 Gew.-%, vorzugsweise zwischen 1.5 bis 7 Gew.-%, insbesondere bevorzugt zwischen 2.5 und 5.5 Gew.-% bezüglich des Gesamtgewichts des gefrorenen Konfekts betragen.

Das mindestens eine pflanzliche Fett des gefrorenen Konfekts kann ein Triglycerid-Fett umfassen, und/oder das mindestens eine pflanzliche Fett kann ein ungehärtetes pflanzliches Fett sein.

Die Gesamtmenge des mindestens einen pflanzlichen Fetts im gefrorenen Konfekt kann zwischen 2 Gew.-% und 15 Gew.-%, vorzugsweise etwa 10 Gew.-% bezüglich des Gesamtgewichts des gefrorenen Konfekts betragen.

Das gefrorene Konfekt kann weiter mindestens ein pflanzliches Protein und/oder mindestens ein pflanzliches Proteinisolat, vorzugsweise Kartoffelprotein und/oder Erbsenprotein, umfassen.

Die Gesamtmenge des mindestens einen pflanzlichen Proteins und/oder des mindestens einen pflanzlichen Proteinisolats im gefrorenen Konfekt kann zwischen 0.5 Gew.-% und 4.0 Gew.-%, vorzugsweise 0.7 bis 2.5 Gew.-% bezüglich des Gesamtgewichts des gefrorenen Konfekts betragen.

Das gefrorene Konfekt kann weiter mindestens ein Süssungsmittel, insbesondere ein Süssungsmittel ausgewählt aus Saccharose, Stärkehydrolysat, Invertzucker, Honig, Agavendicksaft, Ahornsirup, oder Kombinationen davon, und/oder weiter mindestens einen Stabilisator, insbesondere einen Stabilisator ausgewählt aus Johannisbrotkernmehl, Guarkernmehl, Pektin, Carrageenan, oder Kombinationen davon, und/oder weiter mindestens einen Emulgator wie Monoglyceride von Speisefettsäuren und/oder Diglyceride von Speisefettsäuren und/oder Derivate von Speisefettsäuren und/oder Lecithin, und/oder weiter mindestens einen Aromastoff umfassen.

Beispielsweise umfassen somit also 100 Gramm eines gefrorenen Konfekts:

- zwischen 45-75 Gramm Wasser, bevorzugt etwa 61 Gramm Wasser;
- zwischen 10-30 Gramm Süssungsmittel, bevorzugt etwa 20 Gramm Süssungsmittel;
- zwischen 2-15 Gramm pflanzliches Fett, bevorzugt etwa 10 Gramm pflanzliches Fett;
- zwischen 1-12 Gramm von mindestens einem pflanzlichen Bestandteil wie z.B. zumindest teilweise entfettetes pflanzliches Mehl, bevorzugt zwischen 1.5-7 Gramm, insbesondere bevorzugt zwischen 2.5 und 5.5 Gramm des mindestens einen pflanzlichen Bestandteils;
- zwischen 0.5-4 Gramm pflanzliches Protein und/oder pflanzliches Proteinisolat, bevorzugt 0.7 - 2.5 Gramm pflanzliches Protein und/oder pflanzliches Proteinisolat;
- zwischen 0.05-5 Gramm Stabilisator, bevorzugt weniger als 1 Gramm Stabilisator;
- zwischen 0.05-1.5 Gramm Emulgator, bevorzugt weniger als 1 Gramm Emulgator, sowie weniger als 1 Gramm Aromen.

100 Gramm eines bevorzugten gefrorenen Konfekts umfassen:

- 61 Gramm Wasser;
- 19.6 Gramm Süssungsmittel, nämlich Glucosefructosesirup, Saccharose, Traubenzucker und Glucosesirup;
- 8.6 Gramm Kokosfett, raffiniert, nicht gehärtet und nicht fraktioniert;
- 4 Gramm zumindest teilweise entfettetes Mandelmehl mit einem SFC von 1 %;
- 2 Gramm Kartoffelprotein, sowie
- 0.4 Gramm der Stabilisatoren bzw. Emulgatoren E410, E412, E407, E471 und E472 gemäss der Schweizer Verordnung des EDI 817.022.31.

Das gefrorene Konfekt kann einen Luftaufschlag von mehr als 60 %, vorzugsweise zwischen 61 % und 200 %, insbesondere bevorzugt zwischen 80 % und 150 %, am bevorzugtesten zwischen 100 % und 145 % aufweisen.

Wie eingangs erwähnt, ermöglicht die Verwendung von mindestens einem pflanzlichen Bestandteil mit einer Fettphase mit einem Festfettgehalt respektive SFC von 15 % oder weniger sowie einem pflanzlichen Fett umfassend eine Fettphase mit einem Festfettgehalt von mehr als 60 % eine Gesamtfettphase mit einem Gesamtfestfettgehalt von mehr als 50 %, so dass die vorliegende Lebensmittelzusammensetzung bzw. das gefrorene Konfekt nebst diesem erhöhten Festfettgehalt der Gesamtfettphase trotz tiefschmelzenden Fetten gleichzeitig einen tieferen Fettgehalt aufweist. Dadurch ist es möglich, mehr Gas in das gefrorene Konfekt einzubringen. In anderen Worten gesagt weist das gefrorene Konzept also einen erhöhten Luftaufschlag respektive einen erhöhten Overrun auf, wodurch das gefrorene Konfekt sehr cremig wird.

Unter dem Begriff "Overrun" wird die prozentuale Volumenänderung zwischen der gefrorenen Lebensmittelzusammensetzung beziehungsweise des gefrorenen Konfekts vor dem Luftaufschlag und nach dem Luftaufschlag verstanden:

$$\% \, Luftaufschlag \, (Overrun) = \frac{V(B) - V(L)}{V(L)} \times 100.$$

Darin entspricht V(B) dem Volumen der mit Gas beaufschlagten Lebensmittelzusammensetzung [in ml] und V(L) dem Volumen der Lebensmittelzusammensetzung vor Aufschlag [in ml].

Zudem ist es denkbar, dem gefrorenen Konfekt weitere Zutaten wie Frucht- oder Schokoladenstückchen, Saucen, Spiegel, Gebäckstücke, Teigstücke, Pasten, Dekorationen usw. zuzugeben. Hierbei handelt es sich vorzugsweise natürlich ebenfalls um Komponenten, welche im Wesentlichen frei von tierischen Bestandteilen sowie im Wesentlichen frei von Soja-Bestandteilen sowie vorzugsweise im Wesentlichen frei von Lupinen-Bestandteilen sind. Die Beschreibung der Anteile der Lebensmittelzusammensetzung und des gefrorenen Konfekts daraus, gilt ohne die weiteren Zutaten, wie in diesem Abschnitt beschrieben.

Das gefrorene Konfekt kann in einer Verpackung verpackt sein, wobei die Verpackung eine Lichttransmission von weniger als 0.1 %, insbesondere von weniger als 0.01 % bei Wellenlängen im Bereich von etwa 200 nm bis 750 nm aufweist. Solch eine Verpackung minimiert den Lichtdurchtritt von ausserhalb ins Packungsinnere. Dadurch kann beispielsweise eine ungewollte Oxidation der Fette, insbesondere der vorzugsweise zumindest teilweise entfetteten pflanzlichen Mehle, weiter reduziert bzw. verhindert werden.

In einem weiteren Aspekt wird eine Verwendung einer Lebensmittelzusammensetzung wie oben beschrieben zur Herstellung eines gefrorenen Konfekts angegeben. Hierbei wird die Lebensmittelzusammensetzung einem Gefrierverfahren unterzogen, wie nachfolgend noch eingehender erläutert wird.

In einem weiteren Aspekt wird ein Verfahren zur Herstellung eines gefrorenen Konfekts angegeben, welches die Schritte umfasst von:

- Bereitstellen einer Lebensmittelzusammensetzung wie oben beschrieben; und
- Einfrieren der Lebensmittelzusammensetzung, wobei die Lebensmittelzusammensetzung mit einem Gas, vorzugsweise Stickstoff, beaufschlagt wird, und wobei der Gasdruck des Gases insbesondere mindestens 3 bar, vorzugsweise mindestens 4 bar beträgt.

Indem Stickstoff zum Beaufschlagen der Lebensmittelzusammensetzung verwendet wird, kann eine ungewollte Oxidation der Fette wie z.B. der obgenannten pflanzlichen Mehle verhindert oder zumindest reduziert werden. Natürlich ist es denkbar, auch andere Gase oder Gasgemische wie z.B. Luft für die Beaufschlagung zu verwenden. An dieser Stelle sei angemerkt, dass der Begriff "Luftaufschlag", wie er hierin verwendet wird, sich nicht einzig auf eine Beaufschlagung mit Luft bezieht. Viel eher ist damit die Beaufschlagung mit jeglichen im vorliegenden Technologiebereich üblichen Gasen oder Gasgemischen gemeint.

Bevor die Lebensmittelzusammensetzung eingefroren wird ist es von Vorteil, wenn die einzelnen Bestandteile der Lebensmittelzusammensetzung miteinander gemischt und alsdann pasteurisiert und homogenisiert werden. Dabei kann es sich sowohl um eine sogenannte downstream Homogenisierung handeln, welche nach der Erhitzung respektive Pasteurisierung erfolgt, als auch um eine sogenannte upstream Homogenisierung handeln, welche vor der Erhitzung respektive Pasteurisierung erfolgt.

Die Homogenisierung kann in nur einer Stufe oder in mehreren Stufen, beispielsweise in zwei Stufen erfolgen. So ist es denkbar, die Homogenisierung bei einer ersten Stufe mit einem Homogenisierungsdruck im Bereich von etwa 150 bar bis 300 bar, vorzugsweise im Bereich von etwa 170 bar bis 300 bar, sowie bei einer zweiten Stufe durchzuführen, welche zweite Stufe zwischen 0 und 40 % der ersten Stufe beträgt. Das heisst, würde in der ersten Stufe beispielsweise bei einem Homogenisierungsdruck von 170 bar homogenisiert, so würde in der zweiten Stufe mit einem Homogenisierungsdruck von 0 bar bis zu 68 bar homogenisiert werden.

Im Anschluss an die Homogenisierung und Pasteurisierung wird vorzugsweise eine Reifung durchgeführt, wobei die Lebensmittelzusammensetzung während mindestens 2 Stunden, vorzugsweise während mehr als 6 Stunden, bei einer Temperatur von weniger als 10 °C, vorzugsweise von weniger als 5 °C, insbesondere bevorzugt von weniger als 2 °C gehalten wird.

Im Anschluss an die Reifung erfolgt das Einfrieren, oder auch Freezen genannt, in einer kommerziell erhältlichen Eismaschine, wobei es sich vorzugsweise um eine kontinuierliche Eismaschine handelt. Mit dem Pumpensystem dieses Gerätes wird ein in der Ausbringung steuerbarer Mixförderstrom kontinuierlich mit einer davon unabhängig regelbaren Luftmenge beaufschlagt. Darin wird die Lebensmittelzusammensetzung als Mix-Luftgemisch im doppelwandig als Kältemittelverdampfer ausgebildeten Gefrierzylinder durch eine rotierende Messerschlagwelle zu einer Mikroschaumstruktur aufgeschlagen und vorgefroren. Die Messerschlagwelle hat vorzugsweise mindestens 120 Drehungen pro Minute, insbesondere bevorzugt mindestens 300 Drehungen pro Minute.

Das heisst, es muss weder ein sogenannter Batch-Freezer verwendet noch eine Tieftemperaturextrusion angewendet werden, weshalb das vorliegende Verfahren über viele Möglichkeiten hinsichtlich Abfülltechnologien sowie die Einarbeitung von fragilen Stückchen in die Eisgemischmasse erlaubt. Nach der Reifung kann die so erhaltene gefrorene, mit Gas beaufschlagte Lebensmittelzusammensetzung alsdann in Dosen oder Becher abgefüllt oder als Stieleis, Cornets, Pralinen, Kuchen, Torten oder andere gängige Desserts gegossen, dressiert oder extrudiert werden. Nach dem Abfüllen kann das abgefüllte Produkt ausgehärtet werden, wobei die Aushärtung vorzugsweise bei Temperaturen von minus 18 °C oder weniger erfolgt.

ANALYSE

Der Festfettgehalt oder SFC (Solid Fat Content) des extrahierten, wasserfreien Gesamtfetts der Lebensmittelzusammensetzung wurde mit der üblichen Analysemethode gemäss ISO 8292-1 bestimmt, indem das extrahierte wasserfreie Fett für mindestens zwei Stunden in einem Wärmeschrank auf eine Temperatur von 65°C erhitzt und anschliessend während 3 Stunden bei einer Temperatur von 5 °C temperiert wurde. Unter dem Gesamtfett ist hierbei das totale Fett umfassend das oder die Fette des pflanzlichen Fetts sowie das oder die Fette des mindestens einen pflanzlichen Bestandteils, z.B. der zumindest teilweise entfetteten pflanzlichen Mehle, gemeint. Vor der Temperierung wurde die gefrorene Lebensmittelzusammensetzung beziehungsweise das gefrorene Konfekt umfassend die Lebensmittelzusammensetzung mit Säure aufgeschlossen. Der Säureaufschluss der gefrorenen Lebensmittelzusammensetzung beziehungsweise des gefrorenen Konfekts umfassend die Lebensmittelzusammensetzung, nachfolgend in beiden Fällen jeweils Probe genannt, erfolgte dadurch, dass 10.0 Gramm der Probe in einen 250-ml-Schlifferlenmeyerkolben eingewogen wurde. Alsdann wurden 100 ml Salzsäure mit einem Messzylinder zugefügt, ausgeglühte Siedesteinchen wurden in den Erlenmeyerkolben geben und die Probe wurde durch Umrühren suspendiert. Der Inhalt des Erlenmeyerkolbens wurde unter gelegentlichem Umrühren am Rückfluss zum Sieden erhitzt und während 20 Minuten am Rückfluss gekocht. Fettfreie 15-cm-Faltenfilter wurden in einen Trichter geben und mit heissem Wasser gut angefeuchtet. Die heisse Aufschluss-Suspension wurde mit 100 ml heissem Wasser verdünnt und portionenweise auf den Filter gegossen. Der Filter mit Rückstand wurde solange mit heissem Wasser portionenweise gewaschen, bis das ablaufende Wasser nicht mehr sauer ist (Indikatorpapier) oder mit Silbernitratlösung keine Chloridreaktion zeigt. Der Filter wurde alsdann gut abgetropft und anschliessend in einer Extraktionshülse gefaltet sowie in einem Becherglas im Trockenschrank bei 102 °C während 6 Stunden getrocknet. Für die Fettextraktion wurde die Hülse mit Filter in einen Extraktions-Aufsatz überführt, die mit Siedesteinchen versehenen, vorgetrockneten und auf der Analysenwaage tarierten Kolben wurden zur Hälfte mit Petroleumbenzin befüllt, der zum Aufschluss benutzte Erlenmeyerkolben sowie das beim Trocknen als Unterlage dienende Becherglas bzw. Uhrglas wurde mit Petroleumbenzin ausgespült und in den Extraktionskolben überführt, der Extraktionsapparat wurde mit dem Kolben und dem Kühler verbunden und das Heizbad wurde so beheizt, dass das Petroleumbenzin kräftig siedet. Ab beginnendem Sieden wurde 2 1/2 Stunden eine Heissextraktion und während 4 Stunden wurde eine Kaltextraktion durchgeführt. Nach beendigter Extraktion wurde der Kolben an den Rotationsverdampfer gehängt und das Lösungsmittel wurde bei einer Badtemperatur von 70 °C und unter schwachem Vakuum vollständig abgedampft. Der Extraktionskolben mit dem Gesamtfett wurde im Trockenschrank während 1 Stunde bei 102 °C getrocknet, und nach dem vollständigen Abkühlen im Exsikkator ausgewogen. Wie bereits erwähnt wurde das so extrahierte, wasserfreie Gesamtfett für mindestens zwei Stunden im Wärmeschrank auf 65 °C erhitzt, danach 3 Stunden im Wasserbad auf eine Temperatur von 5°C temperiert, und sodann einer Kernspinresonanz (NMR) Messung gemäss dem obgenannten Internationalen Standard unterworfen.
Weiter wurde die Lebensmittelzusammensetzung einem sogenannten Heat-Shock-Test unterzogen, wobei eine Probe der gefrorenen Lebensmittelzusammensetzung beziehungsweise des gefrorenen Konfekts umfassend die gefrorene Lebensmittelzusammensetzung während einer Zeitdauer von 7 Tagen alternierend bei minus 20 °C und minus 5 °C gelagert wurde, wobei die Temperatur alle 6 Stunden gewechselt wurde. Während dieser Zeitdauer darf die gefrorene Lebensmittelzusammensetzung beziehungsweise das gefrorene Konfekt nicht zusammenfallen, das heisst, es sollten keine oder nur wenige beziehungsweise verzögerte Eiskristalle gebildet werden. Die physikalische Struktur der gefrorenen Lebensmittelzusammensetzung bzw. des gefrorenen Konfekts umfassend die Lebensmittelzusammensetzung wurde nach dieser Zeitdauer sensorisch oder visuell diesbezüglich untersucht, wobei bei den optimalen Rezepturen die Schaumstruktur intakt bleibt und auch nach dem Heatshocktest ein kremiges Mundgefühl vorhanden ist. Je tiefer der SFC der Proben, desto schlechter ist die Schaumstabilität. Meist sackt die Schaumstruktur zusammen bei Proben mit tiefem SFC und hohem Overrun, das cremige Mundgefühlt ist nach dem Heatshocktest weg.
Weiter wurden Vergleichsmessungen zwischen einem erfindungsgemässen gefrorenen Konfekt (nachfolgend Variante E) sowie einem gefrorenen Konfekt mit Bestandteilen aus dem Stand der Technik (nachfolgend Variante S) durchgeführt.
Veganes Mandeleis:

| Bestandteile | Variante E$_{Man}$ | Variante S$_{Man}$ | Bemerkung |
|---|---|---|---|
| Wasser | 65.4 | 65.4 | |
| Kokosfett | 8.6 | 8.6 | Raffiniert, nicht gehärtet, nicht fraktioniert |
| Süssungsmittel | 19.6 | 19.6 | Glucosefructosesirup, Saccharose, Traubenzucker, Glucosesirup |

(fortgesetzt)

| Bestandteile | Variante $E_{Man}$ | Variante $S_{Man}$ | Bemerkung |
|---|---|---|---|
| Mandelmehl | 4.0 | | Teilweise entfettet |
| Mandelmark | | 4.0 | Nicht entfettet |
| Kartoffelprotein | 2.0 | 2.0 | |
| Stabilisator/Emulgator | 0.4 | 0.4 | E410, E412, E407, E471, E472 |
| Summe | 100.0 | 100.0 | |

Diese zwei Varianten wurden zunächst bei einer Temperatur von 85°C pasteurisiert und alsdann homogenisiert, wobei die erste Stufe bei 170 bar und die zweite Stufe 0 bar betrugen. Weiter wurden die zwei Varianten jeweils mit einem kontinuierlichen Labor-Freezer unter Luftbeaufschlagung gefreezt. (Hoyer KF 80, Volumenstrom: 35l/h, Zylinderdruck 3.8 bar).

Messungen gemäss obigem Verfahren haben ergeben, dass das teilweise entfettete Mandelmehl der Variante $E_{Man}$ einen SFC in der Fettphase von 1% bei einer Temperatur von 5 °C hat. Weiter umfasst das zumindest teilweise entfettete Mandelmehl der Variante $E_{Man}$ einen Fettgehalt von 11% bezüglich des Gesamtgewichts des Mandelmehls, während das Mandelmark der Variante $S_{Man}$ einen Fettgehalt von etwa 56 Gew.-% aufweist. Die Gesamtfettphase der Variante $E_{Man}$ umfassend die Fettphase des zumindest teilweise entfetteten Mandelmehls sowie die Fettphase des Kokosfetts weist einen Gesamtfestfettgehalt von 73 % bei einer Temperatur von 5°C auf. Die Gesamtfettphase der Variante $S_{Man}$ umfassend die Fettphase des Mandelmarks sowie die Fettphase des Kokosfetts hingegen weist einen Gesamtfestfettgehalt von 44 % bei einer Temperatur von 5°C auf. Somit ist der Anteil an tiefschmelzendem Mandelfett in Variante $E_{Man}$ deutlich tiefer als in der Variante $S_{Man}$. Das erklärt, warum der SFC der Gesamtfettphase bei Variante $E_{Man}$ mit 73% deutlich höher ist als der SFC der Gesamtfettphase der Variante $S_{Man}$, welcher nämlich nur 44% beträgt.

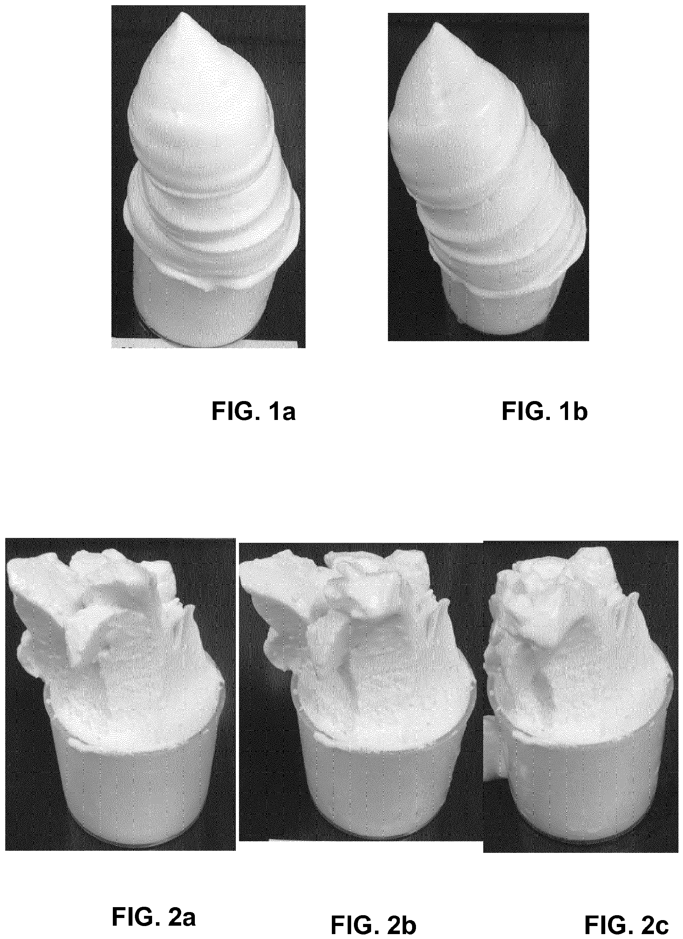

Die Figuren 1a bis 2c zeigen das frisch gefreezte Eis gemäss Rezeptur der Variante $E_{Man}$ zu unterschiedlichen Zeitpunkten. So ist die Variante $E_{Man}$ in Figur 1a 10 Minuten nach der Abfüllung, vor dem Durchhärten bei einer Temperatur von plus 20 °C und in Figur 1b 20 Minuten nach der Abfüllung bei einer Temperatur von plus 20 °C abgebildet. In Figur 2a ist die Variante $E_{Man}$ 5 Minuten nach der Abfüllung bei einer Temperatur von plus 20 °C, in Figur 2b 10 Minuten nach der Abfüllung bei einer Temperatur von plus 20 °C, und in Figur 2c 20 Minuten nach der Abfüllung bei einer Temperatur von plus 20 °C abgebildet. In den hier gezeigten Abbildungen wurde die Variante $E_{Man}$ jeweils mit einem Ziel-Overrun von 100 % hergestellt und alsdann in einem Becher zu 100 ml abgefüllt und bei unter minus 20°C ausgehärtet und im Anschluss in einem Wechselklima bei minus 20°C und minus 5°C während 7 Tagen gelagert.

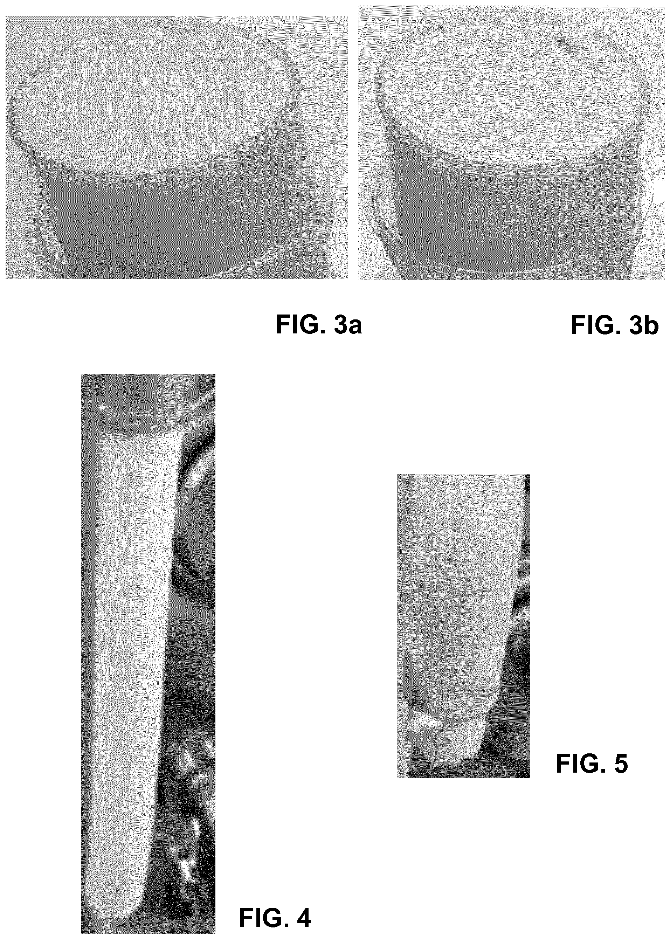

Eine Variante $E_{Man}$, welche mit einem Overrun von 80 % hergestellt wurde, sowie eine Variante $E_{Man}$, welche mit einem Overrun von 104 % hergestellt wurde, ist in Figur 3a respektive 3b dargestellt.

Wie aus den Figuren 1a bis 4 hervorgeht, weist die Variante $E_{Man}$ sogar bei einem Overrun von 100 % eine sehr gute Luftaufnahme auf. Weiter lässt sich diese so mit Luft beaufschlagte und gefrorene Mischung, der sogenannte gefreezte Mix, leicht extrudieren (Viskosität Freezer 63 - 73%) und ist sehr cremig. Die Abschmelzstabilität vom frisch gefreeztem Mix ist hervorragend, der Mix bleibt über mehr als 15 Minuten bei Raumtemperatur formstabil, wobei sogar hoch befüllte Cornets möglich sind (siehe Figuren 1a und 1b). Auch eignet sich die Variante $E_{Man}$ für die Herstellung von extrudierten Eis am Stiel. Wie beispielsweise aus den Figuren 2a bis 2c hervorgeht, bleiben gerade Schnittkanten bei Raumtemperatur während 15 Minuten formstabil. Aus den Figuren 3a und 3b geht hervor, dass diese Proben mit einem Overrun von 80 % (Figur 3a) respektive von 104 % (Figur 3b) Heat Shock-stabil sind und nicht schrumpfen oder kollabieren.

Die Figur 4 zeigt die Extrusion der Variante $E_{Man}$ mit einem Overrun von 104 % und die Figur 5 zeigt die Extrusion der Variante $S_{Man}$ mit einem Overrun von 70 %. Wie aus einem Vergleich der Figuren 4 und 5 hervorgeht, zeigt die Variante $S_{Man}$ bezüglich der Variante $E_{Man}$ eine sehr schlechte Luftaufnahme. Wie in Figur 5 ersichtlich, ist der Mix nach dem Freezen eisig und bröcklig. Der Mixstrang reisst sofort nach dem Verlassen des Freezerrohrs ab, weil die der Mischung zugeführte Luft nicht richtig aufgenommen wird. Der Speiseeismix lässt sich nur bis zu einem maximalen Overrun von 70% beaufschlagen. Höhere Aufschläge sind nicht sinnvoll, da dann bis zu 5 mm grosse Luftblasen entstehen würden, was unerwünscht ist. Variante $S_{MAN}$ ist für die Herstellung von Cornets und extrudierten Lutschern mit einem Overrun von 100% nicht geeignet.

Die Eigenschaften von veganem Eis auf Basis von Macadamia wurden analog zum Mandeleis untersucht.

Veganes Macadamiaeis:

| Bestandteile | Variante $E_{Mac}$ | Variante $S_{Mac}$ | Bemerkung |
|---|---|---|---|
| Wasser | 65.3 | 63.2 | |
| Kokosfett | 8.7 | 8.7 | Raffiniert, nicht gehärtet, nicht fraktioniert |
| Süssungsmittel | 20.9 | 20.9 | Glucosefructosesirup, Saccharose, Traubenzucker, Glucosesirup |
| Macadamiamehl | 2.7 | | Teilweise entfettet |
| Macadamiamark | | 4.8 | Nicht entfettet |
| Kartoffelprotein | 2.0 | 2.0 | |
| Stabilisator/Emulgator | 0.4 | 0.4 | E410, E412, E407, E471, E472 |
| Summe | 100.0 | 100.0 | |

Der Glacemix nach Rezeptur $E_{Mac}$ und $S_{Mac}$ wurden analog den Mandelmixen oben hergestellt. Es wurde versucht die beiden Varianten mit einem Overrun von 100% zu freezen.

Bei der Variante $E_{Mac}$ wird ein teilentfettetes Macadamiamehl verwendet mit einem Fettgehalt von 29 Gew.-% bezüglich dem Gesamtgewicht des teilentfetteten Macadamiamehls sowie einem SFC von 0.3 % bei 5 °C. Der SFC der Gesamtfettphase umfassend die Fettphase des teilentfetteten Macadamiamehls sowie die Fettphase des Kokosfetts beträgt 69 % bei einer Temperatur von 5 °C. Das Macadamiamark der Variante $S_{Mac}$ hingegen verfügt über einen Fettgehalt von 73 Gew.-% bezüglich des Gesamtgewichts des Macadamiamarks und der SFC der Gesamtfettphase umfassend die Fettphase des Macadamiamarks sowie die Fettphase des Kokosfetts beträgt 50 % bei 5 °C.

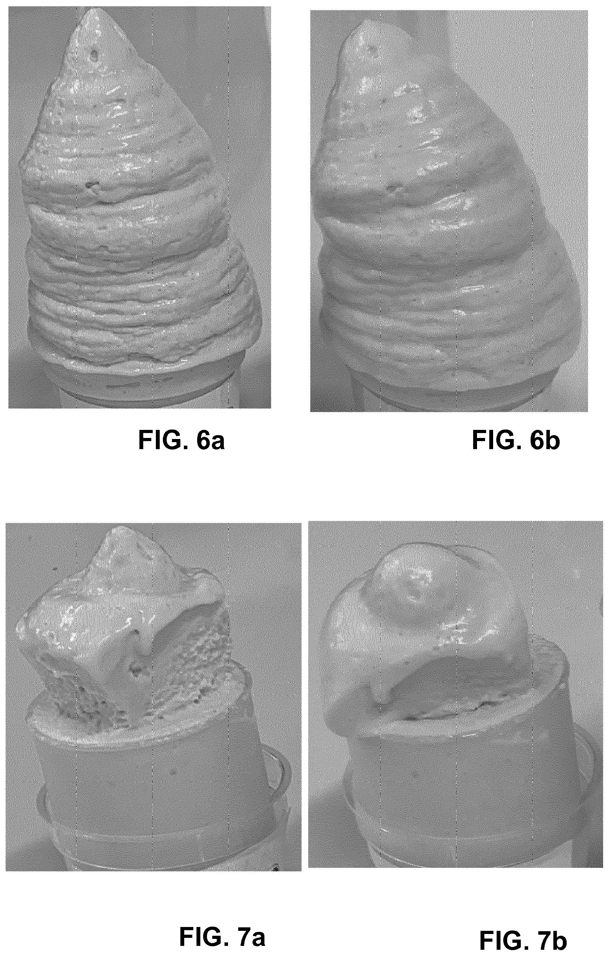

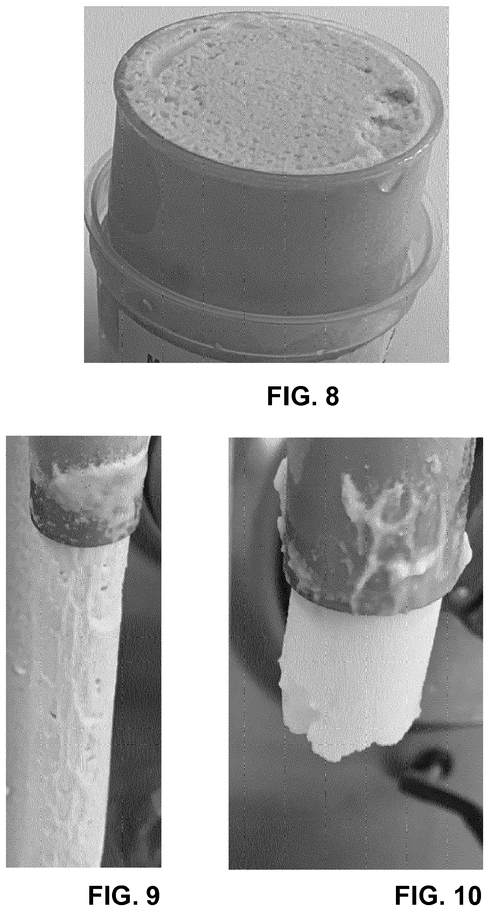

Wie aus den Figuren 6a bis 7b sowie 9 hervorgeht, ist die Herstellung von extrudierten Produkten oder Cornets für die Variante $E_{Mac}$ mit einem Overrun von 100 % möglich. Die Figuren 6a und 7a zeigen das teilentfettete Macadamiaeis dabei frisch ab dem Freeer, während es in den Figuren 6b und 7b nach 12 Minuten bei plus 20 °C gezeigt wird. In Figur 9 wird das Verhalten ab dem Freezer gezeigt. So nimmt die Lebensmittelzusammensetzung der Variante $E_{Mac}$ derart Luft auf, dass ein Overrun von 100 % erreicht wird, und wobei der Strang von extrudiertem Eis hält. Wie aus Figur 8 hervorgeht, ist die Variante $E_{Mac}$ mit einem Overrun von 100 % zudem auch Heat-Shock stabil. Dies ist im Gegensatz zur Variante $S_{Mac}$, welche Luft nur sehr schlecht aufnimmt und nur einen Overrun von 43 % erreicht. Insbesondere ist dieses Eis wässrig und ein Strang aus extrudiertem Eis bricht beim Austritt aus dem Freezer schnell ab, siehe Figur 10. Eine Herstellung von extrudierten Produkten oder Cornets mit einem Overrun von 100 % ist nicht möglich mit $S_{MAC}$.

Wie aus diesen Beispielen hervorgeht, hat der SFC der Gesamtfettphase einen sehr grossen Einfluss auf die Verarbeitbarkeit des veganen Eises. Mit der erfindungsgemässen Lebensmittelzusammensetzung kann ein stabiles Eis mit 100% Overrun oder mehr hergestellt werden.

**Patentansprüche**

1.  Lebensmittelzusammensetzung für ein gefrorenes Konfekt,

    wobei die Lebensmittelzusammensetzung im Wesentlichen frei von tierischen Bestandteilen und im Wesentlichen frei von Soja-Bestandteilen ist, und
    wobei die Lebensmittelzusammensetzung mindestens ein pflanzliches Fett umfasst, **dadurch gekennzeichnet, dass** die Lebensmittelzusammensetzung weiter mindestens einen pflanzlichen Bestandteil mit einer Fettphase umfasst, wobei die Fettphase einen Festfettgehalt von 15 % oder weniger bei einer Temperatur von 5°C aufweist,
    **dass** das mindestens eine pflanzliche Fett eine Fettphase umfasst, welche einen Festfettgehalt von mehr als 60 %, vorzugsweise von mehr als 75 % bei einer Temperatur von 5°C aufweist, und
    **dass** eine Gesamtfettphase umfassend die Fettphase des mindestens einen pflanzlichen Bestandteils und die Fettphase des mindestens einen pflanzlichen Fetts einen Gesamtfestfettgehalt von mehr als 50 %, vorzugsweise mehr als 60 %, insbesondere bevorzugt von zwischen 65 % und 88 % bei einer Temperatur von 5°C aufweist.

2.  Lebensmittelzusammensetzung nach Anspruch 1, wobei die Lebensmittelzusammensetzung im Wesentlichen frei von Lupinen-Bestandteile ist.

3.  Lebensmittelzusammensetzung nach Anspruch 1 oder 2, wobei der mindestens eine pflanzliche Bestandteil mindestens ein pflanzliches Mehl, insbesondere mindestens ein zumindest teilweise entfettetes pflanzliches Mehl ist.

4. Lebensmittelzusammensetzung nach einem der vorhergehenden Ansprüche, wobei die Gesamtmenge des mindestens einen pflanzlichen Bestandteils zwischen 1 Gew.-% und 12 Gew.-%, vorzugsweise zwischen 1.5 und 7 Gew.-%, insbesondere bevorzugt zwischen 2.5 und 5.5 Gew.-% bezüglich des Gesamtgewichts der Lebensmittelzusammensetzung beträgt.

5. Lebensmittelzusammensetzung nach einem der vorhergehenden Ansprüche, wobei das mindestens eine pflanzliche Fett ein Triglycerid-Fett umfasst, und/oder
wobei das mindestens eine pflanzliche Fett ein ungehärtetes pflanzliches Fett ist.

6. Lebensmittelzusammensetzung nach einem der vorhergehenden Ansprüche, wobei die Gesamtmenge des mindestens einen pflanzlichen Fetts zwischen 2 Gew.-% und 15 Gew.-%, vorzugsweise etwa 10 Gew.-% bezüglich des Gesamtgewichts der Lebensmittelzusammensetzung beträgt.

7. Lebensmittelzusammensetzung nach einem der vorhergehenden Ansprüche, weiter umfassend mindestens ein pflanzliches Protein und/oder mindestens ein pflanzliches Proteinisolat, vorzugsweise Kartoffelprotein und/oder Erbsenprotein.

8. Lebensmittelzusammensetzung nach Anspruch 7, wobei die Gesamtmenge des mindestens einen pflanzlichen Proteins und/oder des mindestens einen pflanzlichen Proteinisolats zwischen 0.5 Gew.-% und 4.0 Gew.-%, vorzugsweise etwa 0.7 - 2.5 Gew.-% bezüglich des Gesamtgewichts der Lebensmittelzusammensetzung beträgt.

9. Lebensmittelzusammensetzung nach einem der vorhergehenden Ansprüche, weiter umfassend mindestens ein Süssungsmittel, insbesondere ein Süssungsmittel ausgewählt aus Saccharose, Stärkehydrolysat, Invertzucker, Honig, Agavendicksaft, Ahornsirup, oder Kombinationen davon, und/oder

weiter umfassend mindestens einen Stabilisator, insbesondere einen Stabilisator ausgewählt aus Johannisbrotkernmehl, Guarkernmehl, Pektin, Carrageenan, Alginate, Cellulosederivate, oder Kombinationen davon, und/oder
weiter umfassend mindestens einen Emulgator wie Monoglyceride von Speisefettsäuren und/oder Diglyceride von Speisefettsäuren und/oder Derivate von Speisefettsäuren und/oder Lecithin, und/oder
weiter umfassend mindestens einen Aromastoff.

10. Lebensmittelzusammensetzung nach einem der vorhergehenden Ansprüche, wobei die Lebensmittelzusammensetzung gefroren ist.

11. Gefrorenes Konfekt umfassend eine Lebensmittelzusammensetzung nach einem der vorhergehenden Ansprüche.

12. Gefrorenes Konfekt nach Anspruch 11, wobei das gefrorene Konfekt einen Luftaufschlag von mehr als 60 %, vorzugsweise zwischen 61 % und 200 %, insbesondere bevorzugt zwischen 80 % und 150 %, am bevorzugtesten zwischen 100 % und 145 % aufweist.

13. Gefrorenes Konfekt nach Anspruch 11 oder 12, welches in einer Verpackung verpackt ist, wobei die Verpackung eine Lichttransmission von weniger als 0.1 %, insbesondere von weniger als 0.01 %, bei Wellenlängen in einem Bereich von etwa 200 nm bis 750 nm aufweist.

14. Verwendung einer Lebensmittelzusammensetzung nach einem der vorhergehenden Ansprüche 1 bis 10 zur Herstellung eines gefrorenen Konfekts.

15. Verfahren zur Herstellung eines gefrorenen Konfekts umfassend die Schritte von:

- Bereitstellen einer Lebensmittelzusammensetzung nach einem der vorhergehenden Ansprüche 1 bis 10; und
- Einfrieren der Lebensmittelzusammensetzung, wobei die Lebensmittelzusammensetzung mit einem Gas, vorzugsweise Stickstoff, beaufschlagt wird, und wobei der Gasdruck des Gases insbesondere mindestens 3 bar, vorzugsweise mindestens 4 bar beträgt.

**FIG. 1a**          **FIG. 1b**

**FIG. 2a**          **FIG. 2b**          **FIG. 2c**

FIG. 3a

FIG. 3b

FIG. 4

FIG. 5

FIG. 6a

FIG. 6b

FIG. 7a

FIG. 7b

FIG. 8

FIG. 9

FIG. 10

**EUROPÄISCHER RECHERCHENBERICHT**

Nummer der Anmeldung

EP 19 18 5396

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 876 877 A1 (GERVAIS DANONE SA [FR]) 28. April 2006 (2006-04-28) <br> * Seite 1, Zeile 7 - Zeile 23 * <br> * Seite 13, Zeile 3 - Zeile 14; Tabelle 3 * <br> * Tabelle 6 * <br> ----- | 1-15 | INV.<br>A23G9/32<br>A23G9/42<br>A23L33/185<br>A23G9/38<br>A23L33/00 |
| A,P | US 2019/116852 A1 (KINKELAAR DANIEL [US] ET AL) 25. April 2019 (2019-04-25) <br> * Anspruch 17 * <br> * Absatz [0002] * <br> & WO 2019/079669 A1 (RICH PRODUCTS CORP [US]) 25. April 2019 (2019-04-25) <br> ----- | 1-15 | |
| A | "Chocolate Almond Desert", <br> , <br> April 2018 (2018-04), Seiten 1-4, <br> XP055554033, <br> Gefunden im Internet: <br> URL:https://www.gnpd.com/ <br> [gefunden am 2019-02-12] <br> * das ganze Dokument * <br> ----- | 1-15 | |
| A | "Vanilla Flavoured Almond Milk Ice Cream Sandwich", <br> , <br> März 2013 (2013-03), Seiten 1-3, <br> XP055554038, <br> Gefunden im Internet: <br> URL:https://www.gnpd.com/ <br> [gefunden am 2019-02-12] <br> * das ganze Dokument * <br> ----- | 1-15 | |

RECHERCHIERTE SACHGEBIETE (IPC)

A23G
A23L

-/--

Der vorliegende Recherchenbericht wurde für alle Patentansprüche erstellt

| Recherchenort | Abschlußdatum der Recherche | Prüfer |
|---|---|---|
| München | 30. August 2019 | Oenhausen, Claudia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 19 18 5396

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2018/184684 A1 (COX ANDREW RICHARD [US] ET AL) 5. Juli 2018 (2018-07-05)<br>* Absatz [0009] - Absatz [0011] *<br>* Absatz [0049] *<br>* Absatz [0051]; Ansprüche 36-50 *<br>* Absatz [0073] - Absatz [0076] *<br>----- | 1-15 | |
| T | WO 2014/035470 A1 (TEGEL DANIEL [US]) 6. März 2014 (2014-03-06)<br>* Absatz [0012] - Absatz [0013] *<br>* Absatz [0082]; Ansprüche 1-21 *<br>* Absatz [0030] *<br>----- | 1-17 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 30. August 2019 | Oenhausen, Claudia |

EPO FORM 1503 03.82 (P04C03)

Seite 2 von 2

## ANHANG ZUM EUROPÄISCHEN RECHERCHENBERICHT
## ÜBER DIE EUROPÄISCHE PATENTANMELDUNG NR.

EP 19 18 5396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2019

| Im Recherchenbericht angeführtes Patentdokument | Datum der Veröffentlichung | Mitglied(er) der Patentfamilie | Datum der Veröffentlichung |
|---|---|---|---|
| FR 2876877 A1 | 28-04-2006 | AT 499840 T<br>FR 2876877 A1 | 15-03-2011<br>28-04-2006 |
| US 2019116852 A1 | 25-04-2019 | US 2019116852 A1<br>WO 2019079669 A1 | 25-04-2019<br>25-04-2019 |
| US 2018184684 A1 | 05-07-2018 | BR 112017028428 A2<br>CN 107846956 A<br>EP 3316707 A1<br>US 2018184684 A1<br>WO 2017001266 A1 | 28-08-2018<br>27-03-2018<br>09-05-2018<br>05-07-2018<br>05-01-2017 |
| WO 2014035470 A1 | 06-03-2014 | US 2015017312 A1<br>US 2018271123 A1<br>WO 2014035470 A1 | 15-01-2015<br>27-09-2018<br>06-03-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2017001265 A1